# EUROPEAN PATENT APPLICATION

(11) **EP 2 026 489 A1**
(43) Date of publication of application: **18.02.2009**
(21) Application number: 07016008.0
(22) Date of filing: 14.08.2007
(51) Int. Cl.: H04L 1/00, H04L 1/18

(54) **Method for adapting HARQ re-ordering according to QoS flows and access node thereof**

(71) Applicant: Nokia Siemens Networks Oy, 02610 Espoo (FI)
(72) Inventor: Kolding, Troels, Dr., 9270 Klarup (DK)
(74) Representative: Bruglachner, Thomas E.

(57) **Abstract**

Method and Access Node thereof for allocating transmission instances between an access node (100) and at least one mobile terminal (10) for a data transmission in a radio communications system (1000) comprising the steps of:
- dividing a plurality of frames into at least two groups of sub-frames, wherein at least one group is used for a downlink (DL) data transmission and at least one further group is used for an uplink transmission (UL), each sub-frame defining a transmission instance;
- allocating a sub-frame of said at least one further group to said data transmission, wherein said transmission instance of said sub-frame is dependant on a service requirement of said data transmission.

## Description

### Field of the invention

The invention is used in radio communications systems to enable user equipments to be allocated sufficient resources and to efficiently schedule retransmissions.

### Summary of the invention

In today's radio communications systems a number of different standards exist. Depending on which standards are used radio communications systems can be categorised, for example, as a 3G (3^{rd} Generation), a 4G (4^{th} Generation) system. Different types of technologies are used within these radio communications systems, Universal Mobile Telecommunications System (UMTS) technologies being one such well known technology. Improvements to UMTS are being undertaken under the 3^{rd} Generation Partnership Project Long Term Evolution (3GPP LTE) project.

Within such radio communications systems, different accessing schemes are used to allow mobile stations (MTs) to access the Public Switched Telephone Network (PSTN) and/or the internet. Such schemes can be, for example, one of the following: TDMA (Time Division Multiple Access), FDMA (Frequency Division Multiple Access), CDMA (Code Division Multiple Access). In addition, TDD (Time Division Duplex) can be one way for ensuring that signals or transmissions are separated from each other. Another way can be to use FDD (Frequency Division Duplex).

TDD has the drawback that there is a basic penalty involved in terms of round trip latency for retransmissions of lost or corrupted data from an access node (AN) to a MT, since the UL (uplink) that is the link in the direction between a MT and an AN is only active for a fraction of the time the communication between the two is on-going and that the retransmission process requires transmissions in both the UL and DL (downlink) directions.

When considering delays caused the processing of ACK (acknowledgment) and NACK (negative ACK) transmissions, the RTT (round-trip time) delay for a physical layer or L1 (layer 1) retransmission is twice as high as the RTT in FDD. Such delays can cause problems for delay sensitive services which have high QoS (quality of service) requirements, such as multimedia services, video on demand, TV on demand etc. Furthermore, when using TCP-IP (Transmission Control Protocol - Internet Protocol) protocol suite, such delays will also reduce the peak data rates available in the radio communications system requiring an increase in available radio resources and therefore reducing the efficiency of the radio communications system.

One way to overcome the above mentioned issues is to apply or map HARQ (Hybrid ARQ) processes to the frame structure used in the transmissions. HARQ combines forward error correction (FER) and ARQ (Automatic Repeat Request) by encoding the data block plus error-detection information, such as cyclic redundancy check (CRC) with an error-correction code, such as Reed-Solomon code or Turbo code, prior to transmission. When the coded data block is received, a receiver, for example an MT, first decodes the error-correction code. If the channel quality is good enough, all transmission errors should be correctable, and the MT can obtain the correct data block. If the channel quality is bad and not all transmission errors can be corrected, the MT will detect this situation using the error-detection code, then the received coded data block is discarded and a retransmission is requested by the MT, similar to ARQ. It is also possible instead of discarding the incorrectly received coded data blocks to stored them at the MT rather than discarding them, and when the retransmitted block (or blocks) is/are received, the two blocks are then combined, also known as chase combining, before being fed to the decoder of the error-correction code. This can increase the probability of successful decoding.

A further improvement of HARQ, types II/III HARQ or incremental redundancy HARQ can be used where different re-transmissions are coded differently rather than repeating the same coded bits as in chase combining. Performance is increased, since coding is effectively done across retransmissions. The difference between type III HARQ and type II HARQ is that the retransmission packets in Type III HARQ can be decoded by themselves.

However, one drawback of mapping HARQ processes to the frame structure used, as in the case of the TDD frame structure, is that it does not fully take into account the two-way communication between an AN and a MT and the time delay that is created when applying HARQ. This time delay will affect service with a high QoS. In certain cases of time sensitive data, such delays will result in a requested QoS level not to be met and consequently resulting in a termination of the service. This further reduces the overall efficiency of the radio communication system as a MT needs to re-start the complete process of requesting a service.

A need therefore exists for a technique that resolves the above mentioned issues, takes QoS requirements as well as time delays into account when mapping HARQ processes to the frame structure used in a transmission, especially in the TDD frame structure and maintains the efficiency of a radio communication system.

With the present invention the above mentioned problems are resolved. The proposed technique allows for time delays to be reduced as well as QoS requirements to be considered in an efficient manner without the above mentioned drawbacks.

The technique is achieved by the teachings contained in the independent claims.

Said independent method claim allocates transmission instances between an access node and at least one mobile terminal for a data transmission in a radio communications system comprising the steps of:
- dividing a plurality of frames into at least two groups of sub-frames, wherein at least one group is used for a downlink data transmission and at least one further group is used for an uplink transmission, each sub-frame defining a transmission instance;
- allocating a sub-frame of said at least one further group to said data transmission, wherein said transmission instance of said sub-frame is dependant on a service requirement of said data transmission.

Said independent access node claim comprises of means arranged to execute the method of claim 1.

Further advantages and modifications can be seen in the dependent claims, whereby:
The service requirement is a quality of service requirement. Thus allowing data flows with a high QoS requirement to be taken into account and thus reducing any negative affects caused by waiting for HARQ processes to be completed. A particular transmission instance is selected for the transmission, depending on a high quality of service requirement. In this way an appropriate transmission instance or slot is selected allowing for a faster transmission of data belonging to a data flow that has a high QoS. In particular, for a high quality of service requirement the earliest transmission instance or slot possible of the at least one further group is selected, reducing the RTT to a minimum and so maintaining an efficient radio communications system.

### Short description of the drawings

The present invention will become more fully apparent from the detailed description given herein below and the accompanying drawings which are given by way of illustration only, and thus are not limitative of the present invention, and wherein:
Fig. 1 depicts a radio communications system wherein the inventive technique is applied.
Fig. 2 depicts an allocation period used in TDD.
Fig. 2a, 2b depict a basic and a further delay pattern for the HARQ process.
Fig. 3 depicts the steps of the inventive technique in a flow chart form.
Fig. 4 shows an example of an algorithm that can be used in order to make a decision according to the invention on whether a single flow is to be configured.
Fig. 5 depicts a block diagram of an access node arranged to execute the inventive technique.

### Detailed description of the invention

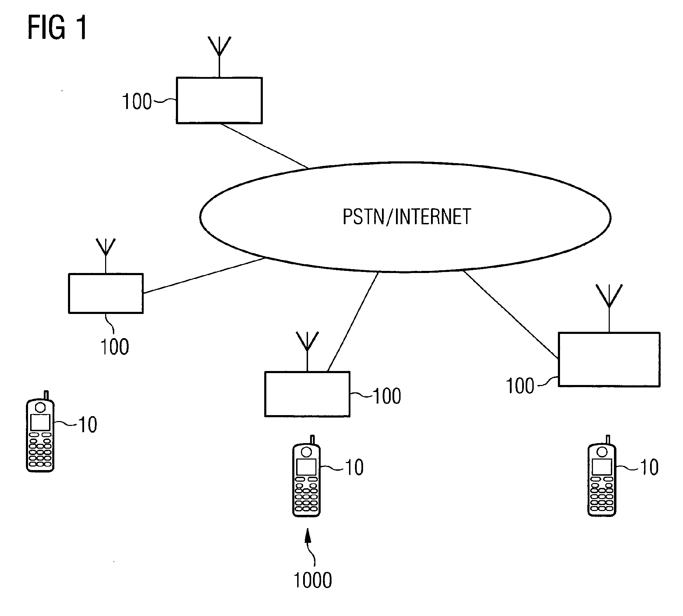

Fig. 1 depicts a radio communications system 1000 wherein the inventive technique is applied. It comprises of a plurality of access nodes 100 and a plurality of MTs 10. Access nodes 100 allow MTs 10 to access the PSTN and/or the internet and request, set up and receive communications and/or services. For reasons of ease of understanding the numerous apparatuses that couple access node 100 to the PSTN and/or the internet are not shown, but are well known in the art.

Access nodes 100 can be at least one of the following: a BS (base station), a BSC (base station controller), an RNC (radio access controller), a nodeB, an e-nodeB. MTs 10 can be at least one of the following: a mobile station, a mobile phone, a user equipment (UE), a portable computer device. Radio communications system 1000 can be one of the following: a 3G, a 4G system using at least one of the following technologies: UMTS, 3GPP LTE technologies. In addition, at least one of the following accessing schemes is used: TDMA, FDMA, CDMA, and signals between access nodes 100 and MTs 10 are separated using TDD or FDD.

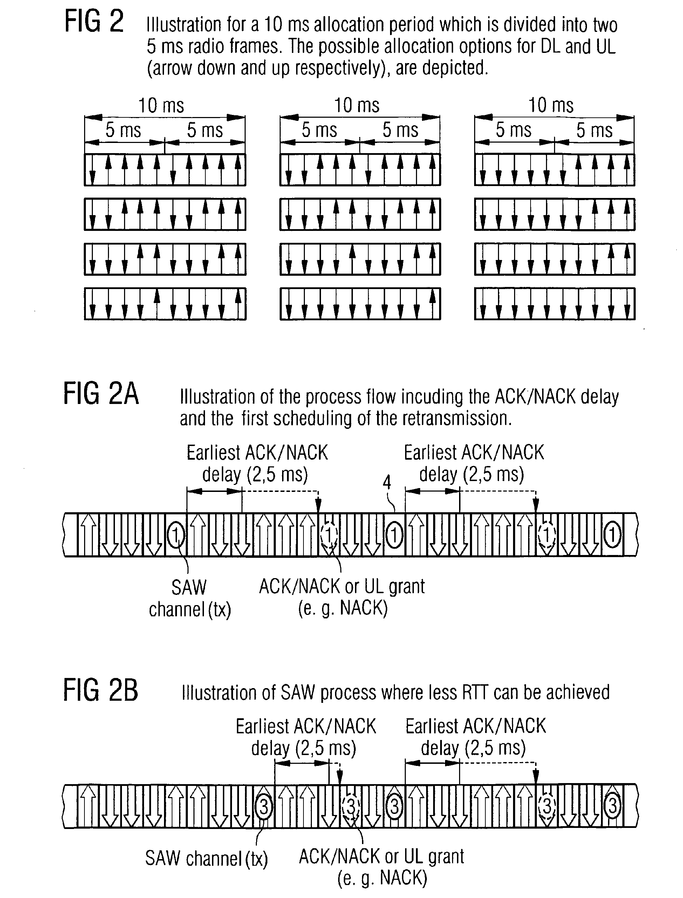

Fig. 2 depicts an allocation period, of 10ms for example, used in TDD. This period is divided into at least two sub-frames of 5ms each. Within these sub-frames slots are allocated for UL and DL transmissions. The duration of the allocation period and of the sub-frames can be hard configured throughout radio communications system 1000 in order to reduce the amount of signalling required as changes will not take place and MTs 10 or ANs 100 will not need to be updated continuously.

In general, an AN 100 requires 2,5ms in order to generate/transmit an ACK/NACK report in the DL towards the MT 10, after is has received the last sample of the data packet which is being investigated. This report may not be a specific ACK/NACK report but can also be an implicit NACK in the form of a scheduled re-transmission.

The basic delay pattern for the HARQ process is shown in fig. 2a. A first transmission is transmitted from MT 10 to AN 100 at point 1. Point 1 also indicates the SAW (stop and wait) process number. In the UL, the HARQ is synchronous so that the associated re-transmission needs to be transmitted at a predefined time instance known by both AN 100 and MT 10. For a fastest RTT (round trip time) a re-transmission should follow in the next UL scheduling group 2. However, this is not possible due to the fact that the processing delay within AN 100 does not allow for this to occur as no transmission on the DL has been effected. Therefore, the AN 100 can only inform MT 10 that the first transmission failed 7TTIs (Transmission Time Intervals) after the first transmission occurred. Thus the earliest possible re-transmission for MT 10 is 10TTIs or 10ms later at point 4. This delay is twice as long as in FDD.

However, as it is depicted in fig. 2b, if the first transmission takes place at a different point in time, it can be possible to achieve a minimum RTT. As it can be seen, a first transmission is transmitted from MT 10 to AN 100 at point 3. Point 3 also indicates the SAW (stop and wait) process number. A first re-transmission can be effected 6TTIs later. However, if this re-transmission fails the next re-transmission will take place at 10TTIs. In the case that data with high QoS is being transmitted, such delays as mentioned previously can seriously degrade the efficiency of the radio communications system 1000 and any services provided during that time.

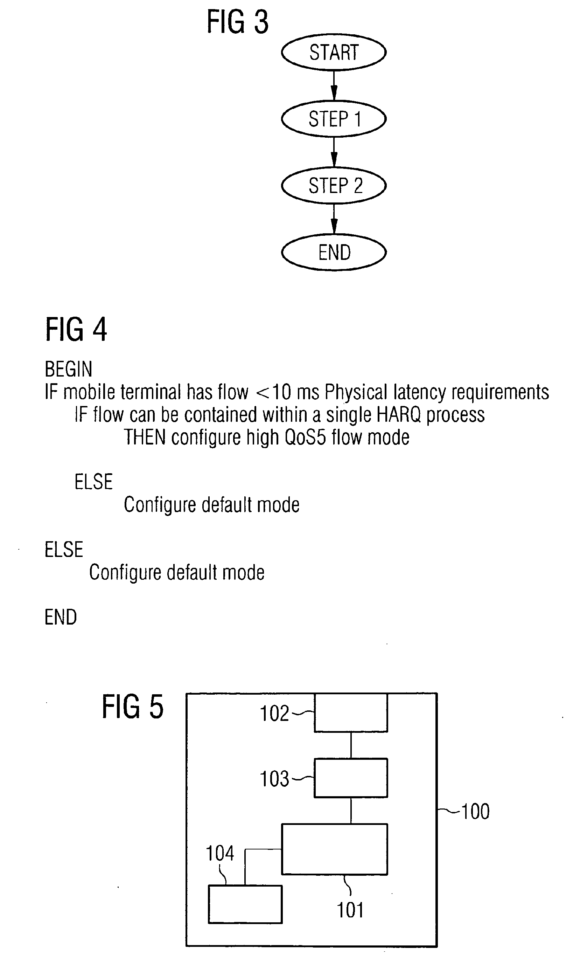

Fig. 3 depicts the steps of the inventive technique in a flow chart form, for allocating transmission instances between an access node 100 and at least one mobile terminal 10 for a data transmission in a radio communications system 1000. In step 1, a plurality of frames is divided into at least two groups of sub-frames or slots, at least one group being used for a downlink DL data transmission and at least one further group being used for an uplink transmission UL. Each sub-frame or slot defining a transmission instance in which a data transmission takes place. In step 2, once the division has been made, a sub-frame from the at least one further group is allocated to the data transmission, the transmission instance of said sub-frame being dependant on a service requirement of the data transmission.

The data transmission comprises of a high data flow, while the service requirement is a quality of service (QoS) requirement. Such QoS requirements can be at least one of the following: a BER (bit error rate) requirement, a performance requirement, a data rate requirement, a data transfer rate.

Depending on whether the data flow has a high QoS requirement, a particular transmission instance or slot is selected. When a high quality of service requirement is present, the particular transmission instance or slot selected is the earliest one possible from the transmission instances of the at least one further group.

In order to avoid any errors when making the allocation of timing instances AN 100, can in a further refinement of the inventive technique monitor data flows being transmitted to MTs 10 in order to continuously be aware of any changes in QoS requirements and thus if required, update or modify any existing allocations.

In addition, in order to avoid any degradation to such data flows, AN 100 needs to decide if a single flow should be configured as a high QoS flow or if all flows should have the same RTT. The decision can be taken at a higher layer, such as L3 (Layer 3) which monitors the QoS requirements for the different services configured for each MT 100. An example of an algorithm that can be used in order to make such a decision is depicted in fig. 4.

The algorithm is advantageous for services having a low data rate i.e. requiring only 1 sub-frame UL allocation per scheduling interval and/or transmission of all data by MTs 10 in the same sub-frame is to be effected. For high data rate services or for MTs 10 in poor coverage conditions, only the default mode is used. The algorithm can be executed as part of a programme written in a programming language and stored on AN 100. Furthermore, the MAC (Medium Access Control) layer is informed by the higher layer about the HARQ configuration in order to execute re-transmissions without errors.

Fig. 5 depicts a AN 100 arranged to execute the inventive technique. AN 100 comprises of control means 101 arranged to control AN 100 and execute the steps of the inventive technique. AN 100 further comprises of transceiver means 102 arranged to transmit and receive transmission from MTs 10, monitoring means 103 arranged to monitor data flows towards MTs 10 and storage means 104 arranged to store information such as a computer programme, necessary for executing the inventive technique. Storage means 104 can be for example a memory chip or another type of memory device known in the art, while the other means 101, 102, 103 can be implemented in an integrated circuit board or a chip according to well known practise.

In order to further help with the understanding of the inventive technique, certain examples are given herein below. These examples implement data flows having a high QoS, whereby a lower or shorter RTT on average is experienced during HARQ than with other data flows.

As shown in fig. 2, the configuration of DL and UL is indicated with the down and up arrows respectively. This can also be shown using the notation "DUUDUU" for example where "D" indicates a sub-frame allocated for a downlink transmission and "U" indicates a sub-frame allocated for an uplink transmission respectively. A configured HARQ process can thus be indicated for example as, "D12D34" where the numbers "1, 2, 3, 4" indicate a configured SAW process flow from the side of an MT 10.

In a first example, a default HARQ configuration of a flow is indicated by "D1234D5671D2345D6712D...".Due to the ACK/NACK processing delay 7 HARQ processes are required in this example. All HARQ SAW flow experience the same average delay and it will vary for all SAW processes from 8 - 9 seconds.

When implementing in this example a high QoS SAW flow, it is denoted by the number "1". According to the inventive technique the flow will be configured as "D1234D1567D1234D156...". SAW flow "1" is given a timing instance or slot or sub-frame that is the earliest one possible for an uplink transmission. In this example SAW flow "1" will have a latency or delay of 5ms which indicates a very good performance and efficiency of the radio communications system.

In a second example, the default HARQ configuration of a flow is indicated by "DD123DD561DD234DD512DD...", which gives an average latency or delay of 7 - 9 ms for all flows. Again when implementing in this example a high QoS SAW flow, it is denoted by the number "1". According to the inventive technique the flow will be configured as "DD123DD145DD123DD12...". SAW flow "1" is given a timing instance or slot or sub-frame that is the earliest one possible for an uplink transmission. In this example SAW flow "1" will have a latency or delay of 5ms which indicates a very good performance and efficiency of the radio communications system.

The above examples were given keeping in mind that the allocation of the sub-frames or slots for DL/UL was the same for all 5ms scheduling intervals. However, the inventive technique is also applicable to allocation intervals of 10ms, 20ms.

In a third example, the default HARQ configuration of a flow is indicated by
"DD123DD456DD712D3456DD712DD345DD671D234DD671DD...". This default configuration produces a 10 - 12ms delay for all flows. Again when implementing in this example a high QoS SAW flow, it is denoted by the number "1". According to the inventive technique the flow will be configured as
"DD123DD145DD167D2345DD167DD123DD145D6723DD145DD167DD...". SAW flow "1" is given a timing instance or slot or sub-frame that is the earliest one possible for an uplink transmission. In this example SAW flow "1" will also have a latency or delay of 5ms which also indicates a very good performance and efficiency of the radio communications system.

Although the invention has been described in terms of a preferred embodiment described herein, those skilled in the art will appreciate other embodiments and modifications which can be made without departing from the scope of the teachings of the invention. All such modifications are intended to be included within the scope of the claims appended hereto.

## Claims

1. Method for allocating transmission instances between an access node (100) and at least one mobile terminal (10) for a data transmission in a radio communications system (1000) comprising the steps of:
- dividing a plurality of frames into at least two groups of sub-frames, wherein at least one group is used for a downlink (DL) data transmission and at least one further group is used for an uplink transmission (UL), each sub-frame defining a transmission instance;
- allocating a sub-frame of said at least one further group to said data transmission, wherein said transmission instance of said sub-frame is dependant on a service requirement of said data transmission.

2. Method according to claim 1, wherein said service requirement is a quality of service requirement.

3. Method according to claim 2, wherein a particular transmission instance is selected dependant on a high quality of service requirement.

4. Method according to claim 3, wherein for a high quality of service requirement said particular transmission instance is an earliest one possible of said at least one further group.

5. Method according to claim 1, wherein said data transmission comprises of a high data flow.

6. Access node (100) arranged to comprising means adapted to execute the method of claims 1 to 5.

7. Access node (100) according to claim 6, wherein said access node (100) is at least one of the following: a base station, a base station controller, a radio access controller, a nodeB, an e-nodeB.

8. Radio communications system (1000) comprising at least one access node (100) according to claims 6 to 7.

9. Radio communications system (1000) according to claim 8, wherein time division duplex is used to separate transmissions.
